# EUROPÄISCHE PATENTSCHRIFT

(11) **EP 0 827 430 B1**
(45) Veröffentlichungstag und Bekanntmachung des Hinweises auf die Patenterteilung: **03.11.1999**
(21) Anmeldenummer: 96900905.9
(22) Anmeldetag: 05.01.1996
(51) Int. Cl.: B09C 1/10, C02F 3/34, A62D 3/00

(54) **BIOTECHNOLOGISCHE SANIERUNG VON SCHWERMETALLHALTIGEN BÖDEN UND WÄSSERN**
BIOTECHNOLOGICAL PURIFICATION OF GROUND AND WATER CONTAINING HEAVY METALS
ASSAINISSEMENT BIOTECHNOLOGIQUE DE SOLS ET D'EAUX CONTENANT DES METAUX LOURDS

(30) Priorität: 05.01.1995 DE 19500229
(43) Veröffentlichungstag der Anmeldung: 11.03.1998
(73) Patentinhaber: Krahn, Roland, 40724 Hilden (DE); Henkler, Rolf-Dieter, 40593 Düsseldorf (DE); Ensslin, Walther, Dr., 40723 Hilden (DE); Bartsch, Ulli, 42781 Haan (DE)
(72) Erfinder: Krahn, Roland, 40724 Hilden (DE); Henkler, Rolf-Dieter, 40593 Düsseldorf (DE); Ensslin, Walther, Dr., 40723 Hilden (DE); Bartsch, Ulli, 42781 Haan (DE)
(86) Internationale Anmeldenummer: EP9600027
(87) Internationale Veröffentlichungsnummer: WO9620797

(56) Entgegenhaltungen:
- WO-A-94/02211
- US-A- 4 108 722
- US-A- 4 522 723
- US-A- 4 789 478
- US-A- 5 263 795
- SULPHUR, Nr. 235, November 1994 - Dezember 1994, LONDON GB, Seiten 59-69, XP002001674 "Exploiting nature's sulphur cycle"

## Beschreibung

Die Erfindung betrifft ein Verfahren zur Sanierung schwermetallhaltiger Böden und Wässer mit Mikroorganismen.

Es ist bekannt, daß schwermetallhaltiger Boden ausgebaggert und deponiert oder erst nach Vermischung mit Beton oder nach thermischer Behandlung (Verglasung) abgelagert wird. Durch Einbringen von Spundwänden werden Schwermetalldeponien gegen das Auswaschen durch seitlich eindringendes Wasser geschützt. Durch die Deponierung von löslichen Schwermetallverbindungen wird aber auf Dauer keine sichere Lagerung gewährleistet, sie stellt daher ein permanentes Risiko dar.

Zur Sanierung von mit Schwermetallen belastetem Wasser besteht die Möglichkeit, durch Zugabe von Eisensulfat und Kalkmilch Eisenhydroxid zu fällen, an das Schwermetalle adsorptiv gebunden und abgetrennt werden. Nachteilig ist hier jedoch, daß die Abwasserreinigung nur bei einem mittleren bis hohen Schwermetallgehalt durchgeführt wird, da sie chemikalien- und kostenintensiv ist. Um eine weitgehende Adsorption der Schwermetalle zu erreichen, müßten große Mengen an Fällungsmitteln eingesetzt werden, die anschließend mit Schwermetallen kostspielig deponiert werden müssen. Dies führt zu erheblich vergrößerten Volumina und Mengen, die zu entsorgen sind.

Aus der US 4 789 478 ist ein verfahren zur Behandlung von schwermetallhaltigen Wässern bekannt, in dem Citrobacter freundii eingesetzt wird. Dieser Mikroorganismus ist nach der Gentechnik-Slcherheits-VO (GenTSV) in die Risikogruppe 2 eingestuft und kann somit beim Menschen Krankheiten verursachen. Nachteilig ist der Temperatur- und der enge pH-Bereich, in dem dieser Mikroorganismus seine Wirkung entfaltet. Er ist ferner nicht tolerant gegenüber größeren Konzentrationen von Schwermetallen, so daß er zur Sanierung schwermetallhaltiger Böden nicht eingesetzt werden kann.

Die WO-A-94/02211 beschreibt ein Verfahren zur Sanierung von mit Organometallen kontaminierten Böden, worin, ausgehend von anaeroben Bedingungen im Boden, durch wiederholte Zugabe von Nährstoffen, insbesondere einer Kohlenstoffquelle, das Wachstum von Sulfat reduzierenden Bakterien stimuliert wird. Insbesondere schlägt dieser stand der Technik die Zugabe von Hefeextrakt als Teil einer Nährlösung vor. Die Sulfat reduzierenden Bakterien spalten indirekt die Organometalle, indem sie Schwefelwasserstoff produzieren. Dieser reagiert mit der Organometallen zu Metallsulfiden. Dieser Prozeß läuft jedoch sehr langsam ab und wird durch pH-Werte unterhalb von pH 5 bzw. hohen Schwermetallkonzentracionen gehemmt.

Der Erfindung liegt deshalb die Aufgabe zugrunde, die Auswaschung toxischer Schwermetalle in das Grundwasser oder deren kapillaren Aufstieg in die oberen Bodenschichten zu verhindern, ohne daß Altlasten ausgekoffert werden müssen, und schwermetallhaltige Wässer in einem Weiten Konzentrations-, Temperatur- und pH-Bereich von Schwermetallen zu reinigen, ohne daß Auftreten von Erkrankungen durch Mikroorganismen befürchten zu müssen.

Gelöst wird diese Aufgabe durch ein verfahren zur Sanierung von mit Schwermetallen belasteten Wässern und Böden, in dem man in den zu behandelnden Böden und Wässern durch Zuführung von Hefe Bedingungen einstellt, unter denen die dort vorhandenen Mikroorganismen Schwefelwasserstoff bilden, und den Schwefelwasserstoff mit den Schwermetallen zu Metallsulfiden reagieren läßt.

Durch gesteuerte biologische Bildung von Schwefelwasserstoff am Ort des Schwermetalls unter anaeroben Bedingungen gelingt erfindungsgemäß die Einkapselung und Immobilisierung von Schwermetallen in der Belastungszone, wobei eine verstärkte Schwefelwasserstoffbildung sogar durch Schwermetalle induziert wird. Ein Eintreten von Schwermetallen in die Nahrungskette ist dann nicht mehr zu befürchten. Das erfindungsgemäße Verfahren ermöglicht auch eine kostengünstige Sanierung von großflächig verteilten Schwermetallbelastungen in geringen Konzentrationen.

Gegenüber Schwermetallen tolerante fakultative Anaerobier sind erfindungsgemäß solche, die in Toxizitätstests EC₅₀-Werte im Bereich von 10 bis 1000 ppm aufweisen.

Als Schwefelquelle kann dem zu sanierenden Boden, Grundwasser oder Wasser kolloidaler Schwefel (Netzschwefel), Schwefel, gelöst in Dimethylsulfoxid, Alkali- oder Erdalkalisulfat, Thiosulfat und Polysulfid zugesetzt werden. In vielen Fällen wird der natürlich vorkommende Gehalt an Alkali- und Erdalkalisulfaten oder anderen im Boden oder Wasser vorhandenen Schwefelverbindungen ausreichen.

Die Schwefelquelle kann in Form von Lösungen, Aufschlämmungen oder in anderen Formen eingesetzt werden.

Als besonders vorteilhaft hatte sich bei der Behandlung von schwermetallbelastetem Wasser erwiesen, auf äußere und innere Poren eines Trägers Schwefel aufzudampfen und diesen mit Schwefel bedampften Träger einzusetzen. Als Träger eignet sich beispielsweise ein offenporiges Sinterglas. Gemäß einer bevorzugten Ausführungsform ist der Träger mit den erfindungsgemäß einzusetzenden Mikroorganismen besiedelt.

Zur Induzierung oder zur Beschleunigung des Verfahrens hat es sich als vorteilhaft erwiesen, oxidierbare, biologisch verwertbare, organische Substanzen als Kohlenstoffquelle einzubringen, die bei ihrem biologischen Abbau für anaerobe Bedingungen sorgen. Solche Substanzen sind beispielsweise Melasse, Acetate, Lactate, Glycerin, Ethanol und Abfälle aus der Zuckerrübenverwertung und der Bierherstellung.

Als Stickstoffquelle und als Nährsalze haben sich in vorteilhafter Weise Gemische aus Natriumammoniumhydrogenphosphat und Magnesiumsulfat ebenso wie handelsübliche Düngermischungen mit möglichst wenig Nitrat bewährt.

Sofern keine Mikroorganismen zur Bereistellung von Schwefelwasserstoff im Boden vorhanden sind, kann gemäß einer besonders bevorzugten Ausführungsform eine wässrige Suspension von Hefepilzen, Bäcker-, Wein- oder untergärige Bierhefe (Saccharomyces cerevisiae), zugesetzt werden. Zur Kostenverringerung beim Erwerb der erfindungsgemäß einsetzbaren Hefe ist deren Anzüchtung mit Melasse und ähnlichen zuckerhaltigen Substraten als Vorkultur empfehlenswert.

Hefen haben sich als besonders vorteilhaft erwiesen, weil sie auch bei tieferen Temperaturen um 10 °C sowie in einem pH-Bereich von 4 bis 8 eine hohe biologische Wirksamkeit zeigen. Sie gelten insbesondere als besonders tolerant gegenüber Schwermetallen.

Überprüft und optimiert werden kann der Fortgang der Sanierung durch den Nachweis von Schwefelwasserstoff im hochgepumpten Wasser mit einer elektronischen Sonde oder einfacher mit feuchtem Bleiacetatpapier. Liegt keine Schwefelwasserstoffbildung vor, kann die Ursache mit einfachen Labormitteln in kurzer Zeit festgestellt werden. Bildet sich Schwefelwasserstoff oder schwarzes Kobaltsulfid erst nach der Zugabe von Hefepilzen zum hochgepumpten Wasser, welches mit einer verdünnten Kobaltsalzlösung, etwa 50 mg Co²⁺/l, versetzt wurde, dann liegt ein Mangel an Mikroorganismen im Boden vor, der leicht durch Zugabe derselben behoben werden kann. Erfolgt trotz dieser Mikroorganismenzugabe keine Schwefelwasseretoffbildung im Boden, dann kann das Nährsalzangebot, der pH-Wert, die Menge an zugesetztem organischen Material und der Gehalt an Schwefel oder Schwefelverbindungen im Labor überprüft und optimiert werden.

Verhindert eine zu hohe Toxizität des Bodenwassers jede biologische Wirkung, dann muß die Sanierung in Randbereiche der Deponie oder in größere Tiefen ausweichen, wo die Konzentration an Schwermetallen und anderen toxischen Substanzen geringer ist und eine biologische Sanierung möglich ist. Auch dies führt letztendlich Zu einer Einkapselung und Immobilisierung der Schwermetalle.

Die anaerobe Sanierurgszone kann allerdings auch durch erhöhte Zugabe reduzierender Substanzen wie diejenigen, die als Kohlenstoffquelle beschrieben sind, bis knapp unter die Oberschichten des Bodens ausgedehnt werden. Unter diesen Umständen ist auch eine Abdeckung der belasteten Schicht mit einer relativ wasser- und damit auch sauerstoffundurchlässigen Schicht wie einer Tonschicht zu empfehlen, da Schwermetallsulfide im sauren Milieu unter Sauerstoff- oder Nitratzufuhr langsam mikrobiologisch zu löslichen Sulfaten umgewandelt werden können.

Durch die dosierte Schwefel- oder Nährstoffzugabe wird die Gefahr einer überschießenden H₂S-Bildung verhindert. Aus Lücken der Fällungszone austretende Schwermetallsalze werden von eindiffundierendem Schwefelwasserstoff gefällt, wodurch das Leck geschlossen und eine vollständige Einkapselung der Belastungszone erreicht wird. Die Schwermetalle liegen dann als Sulfide wie in geologischen Lagerstätten vor, welche resistent gegen äußere Einflüsse wie Sickerwasser sind. Somit entfallen Abdichtungen dieser Schwermatalldeponien nach allen Seiten. Vorteilhaft ist ferner, daß bei der biologischer schwermetallfixierung, wie sie erfindungsgemäß vorgeschlagen wird, gezielt eingesetzte oder schon an die Stoffe der Deponie angepaßte Mikroorganismen gleichzeitig auch andere Schadstoffe der Deponie abbauen, so daß eine kombinierte Sanierung mehrerer Schadstoffgruppen möglich wird, was auch für zu reinigende Wasser oder Abwässer zutrifft.

Schwefel oder Schwefelverbindungen und darüber hinaus gegebenenfalls die weiteren zuvor genannten Verbindunge: können über Rohrsysteme oder durch Einsickern in schwermetallbelastete Böden eingebracht werden. Im Falle von mit Schwermetallen belasteten Wässern werden diese dem Wasser ebenfalls über Rohrleitungen oder von Hand zugegeben.

Nachfolgend wird das erfindungsgemäße Verfahren durch Beispiele erläutert.

### Vergleichsbeispiel

5 g eines mit 1000 mg/kg Bleiohromat (PbCrO₄) belasteten Bodens wurden in ein luftdicht verschließbares Gefäß gegeben.

Der Boden hatte eine hellbräunliche Färbung. Eine wässrige Lösung (4 ml) von etwa 40 mg Natriumacetat, 5 mg Natriumammoniumhydrogenphosphat und 20 mg Netzschwefel wurden in das mit dem belasteten Boden befüllte Gefäß pipettiert und anschließend das Gefaß verschlossen. Das Gefäß wurde acht Wochen bei Raumtemperatur belassen. Nach dieser Zeit färbte sich der Boden durch Bildung von Bleisulfid schwarz.

Dieses Beispiel zeigt, daß die im Boden vorhandene Population von Mikroorganismen durch geeignete Behandlung zur Bildung von Schwefelwasserstoff stimmuliert werden kann, der mit Bleichromat zu Bleisulfid reagiert.

### Beispiel 1

Die Verfahrensweise von Beispiel 1 wurde wiederholt, wobei jedoch in diesem Fall 1 ml einer wässrigen Suspension von Saccharomyces cerevisiae (Backhefe) mit einer Zelldichte von 10⁵ Zellen je ml hinzugegeben wurde. Bereits nach 7 Tagen zeigte sich eine Schwärzfärbung der Intensität, wie sie in Beispiel 1 nach 8 Wochen erreicht wurde.

### Beispiel 2

10 g eines Quarzsandes mit etwa 200 mg verschiedener Schwermetallverbindungen wie Bleioxid (PbO), Kobalt- und Nickelsalze wurden in ein luftdicht verschließbares Gefäß gegeben und mit 4 ml einer wässrigen Lösung von 30 mg Glycerin, 5 mg Natriumammoniumhydrogenphosphat und 20 mg Netzschwefel versetzt. Anschließend wurde 1 ml einer Suspersion von Saccharomyces cerevisiae (Backhefe) mit einer Zelldichte von 10⁸ Zellen je ml hinzupipettiert, das Gefäß verschlossen und nach einer Stunde eine deutliche Schwarzfärbung festgestellt.

## Patentansprüche

1. Verfahren zur Sanierung schwermetallhaltiger Wässer und Böden, dadurch gekennzeichnet, daß man in den zu behandelnden Böden und Wässern durch Zufuhrung von Hefe Bedingungen einstellt, unter denen die dort vorhandenen Mikroorganismen Schwefelwasserstoff bilden und den Schwefelwasserstoff mit den Schwermetallen zu Metallsulfiaen reagieren läßt.

2. Verfahren nach Anspruch 1, dadurch gekennzeichnet, daß man in die zu sanierenden Wässer oder Böden anorganische Nähr- oder Puffersalze einbringt.

3. Verfahren nach Anspruch 1 oder 2, dadurch gekennzeichnet, daß man den zu sanierenden Wässern oder Böden biologisch verwertbare Verbindungen, wenn erforderlich, als Kohlenstoffquelle und/oder als Schwefelquelle zuführt.

4. Verfahren nach Anspruch 1, dadurch gekennzeichnet, daß man die Hefe in Form einer Vorkultur mit erhöhter Zelldichte zuführt.

5. Verfahren nach Anspruch 1 bis 4, dadurch gekennzeichnet, daß man auf dem zu sanierenden Boden eine Oberflächenabdichtung aufbringt.

6. Verfahren nach Anspruch 1 bis 5, dadurch gekennzeichnet, daß man zur Behandlung von mit Schwermetallen belascetem Wasser einen mit Schwefel bedampften und mit Mikroorganismen besiedelten Träger einsetzt.

## Claims

1. Method of cleaning up waters and soils polluted with heavy metals, characterized in that by adding yeast to the waters and soils to be treated conditions are established under which the microorganisms present therein will form hydrogen sulphide, and the hydrogen sulphide is allowed to react with the heavy metals to form metal sulphides.

2. Method according to Claim 1, characterized in that inorganic nutrients or buffer salts are added to the waters or soils to be cleaned up.

3. Method according to Claim 1 or 2, characterized in that, if necessary, biologically utilizable compounds are added as a carbon source and/or sulphur source to the waters or soils to be cleaned up.

4. Method according to Claim 1, characterized in that yeast is added in the form of an initial culture with a high cell density.

5. Method according to Claims 1 to 4, characterized in that a surface seal is applied to the soils to be cleaned up.

6. Method according to Claims 1 to 5, characterized in that a carrier with vapordeposited sulphur and a microorganism population is used for treating waters polluted with heavy metals.

## Revendications

1. Procédé pour l'assainissement des eaux et sols contenant des métaux lourds caractérisé en ce qu en ajoutant de la levure dans les sols et les eaux à traiter on obtienne des conditions sous lesquelles les microorganismes qui y résident produisent de l'acide sulfhydrique et qu'on fasse agir cet acide sulfhydrique avec les métaux lourds pour obtenir des sulfures de métaux.

2. Procédé suivant revendication 1, caractérisé en ce que l'on apporte dans les eaux ou les sols à assainir des sels nutritifs ou des sels tampons anorganiques.

3. Procédé suivant revendication 1 ou 2, caractérisé en ce que l'on apporte dans les eaux ou les sols à assainir des composés utilisables biologiquement comme source de carbone et/ou source de soufre, si nécessaire.

4. Procédé suivant revendication 1, caractérisé en ce que l'on ajoute la levure sous forme de pré-culture à densité cellulaire plus élevée.

5. Procédé suivant revendications 1 à 4, caractérisé en ce que l'on apporte sur le sol à assainir un colmatage de surface.

6. Procédé suivant revendications 1 à 5, caractérisé en ce que l'on utilise pour le traitement des eaux chargées de métaux lourds un agent traité à la vapeur sufurique et contenant des microorganismes.
